# EUROPÄISCHE PATENTSCHRIFT

(11) **EP 3 288 434 B1**
(45) Veröffentlichungstag und Bekanntmachung des Hinweises auf die Patenterteilung: **30.06.2021**
(21) Anmeldenummer: 16719361.4
(22) Anmeldetag: 21.04.2016
(51) Int. Cl.: A47L 9/28

(54) **HAUSHALTSROBOTER UND VERFAHREN ZUM BETREIBEN EINES HAUSHALTSROBOTERS**
DOMESTIC ROBOT AND METHOD FOR OPERATING A DOMESTIC ROBOT
ROBOT MÉNAGER ET PROCÉDÉ POUR FAIRE FONCTIONNER UN ROBOT MÉNAGER

(30) Priorität: 28.04.2015 DE 102015106536
(43) Veröffentlichungstag der Anmeldung: 07.03.2018
(73) Patentinhaber: Vorwerk & Co. Interholding GmbH, 42275 Wuppertal (DE)
(72) Erfinder: CORNELISSEN, Markus, 53332 Bornheim (DE)
(74) Vertreter: Cohausz & Florack
(86) Internationale Anmeldenummer: PCT/EP2016/058890
(87) Internationale Veröffentlichungsnummer: WO 2016/173919

(56) Entgegenhaltungen:
- EP-A1- 3 072 432
- EP-A2- 2 508 957
- EP-A2- 2 801 313
- JP-A- 2007 029 489
- US-A1- 2012 103 367

## Beschreibung

Die Erfindung betrifft einen Haushaltsroboter, insbesondere einen selbsttätig verfahrbaren Reinigungsroboter für eine Bodenfläche, mit einem Gehäuse, mit einem an der Unterseite des Gehäuses angeordneten Fahrwerk, mit einer Sensorik zum Erfassen der Umgebung des Gehäuses und mit einer Steuerung aufweisend Steuermittel zum selbsttätigen Steuern des Fahrwerks, wobei Erfassungsmittel zum Erfassen eines von Exkrementen eines Lebewesens verunreinigten Teilbereichs der Bodenfläche vorgesehen sind und wobei die Steuermittel in Abhängigkeit von einem Ausgangssignal der Erfassungsmittel die Funktionsweise des Haushaltsroboters verändern. Die Erfindung betrifft auch ein Verfahren zum Betreiben eines Haushaltsroboters, insbesondere eines selbsttätig verfahrbaren Reinigungsroboters für eine Bodenfläche.

Unter einem Haushaltsroboter wird im Rahmen dieser Beschreibung ein beliebiges, selbsttätig verfahrbares Haushaltsgerät verstanden, das mindestens eine Haushaltsfunktion verwirklicht. Unter einem Haushaltsroboter wird insbesondere ein autonomer Bodenbearbeitungsroboter, beispielsweise ein Bodenreinigungsroboter, insbesondere Saug-, Wisch- und/oder Kehrroboter verstanden. Derartige Bodenbearbeitungsroboter verfügen über elektrisch betriebene Saug-Gebläseeinheiten und/oder elektromotorisch angetriebene Bürsten und/oder Borstenwalzen und/oder Wischeinheiten. Ebenso kann unter einem Bodenbearbeitungsroboter ein Rasenmäher verstanden werden. Unter einem Haushaltsroboter wird des Weiteren ein Serviceroboter verstanden, der eine andere Funktion als eine Reinigungsfunktion, beispielsweise eine Transportfunktion verwirklicht. Im Folgenden wird die Erfindung ohne eine Beschränkung der Offenbarung hauptsächlich in Bezug auf Reinigungsroboter für eine Bodenfläche im Haushaltsbereich beschrieben, die hauptsächlich als sogenannte Saugroboter in privaten und geschäftlichen Haushalten im Einsatz sind.

Die Stromversorgung des selbsttätig verfahrbaren Haushaltsroboters erfolgt über Akkumulatoren. Zum Aufladen der Akkumulatoren und darüber hinaus ggf. auch zur Entsorgung des in einem geräteinternen Behälter gesammelten Schmutzes oder Abfalls ist dem Haushaltsroboter eine Basisstation zugeordnet, die an das Haushaltsstromnetz angeschlossen ist.

Der Haushaltsroboter findet die Basisstation selbsttätig auf, bspw. mit Hilfe einer Funk- und/oder Lichtsignalführung oder auch einer Funkkommunikation zwischen Basisstation und Haushaltsroboter. Die Aufforderung zum Anfahren der Basisstation kann selbsttätig erfolgen, so bspw. durch Funkkommunikation zwischen Basisstation und Haushaltsroboter. Ebenso kann der Haushaltsroboter selber in Abhängigkeit vom Füllgrad des geräteseitigen Schmutzbehälters und/oder vom Ladezustand der Akkumulatoren die Basisstation anfahren. Des Weiteren kann der Haushaltsroboter nach Abschluss einer durchzuführenden Arbeit, bspw. einer Reinigung eines vorgegebenen Fußbodenbereiches, die Basisstation selbsttätig anfahren.

Die selbsttätige Funktionsweise der Haushaltsroboter wird als wertvolle Eigenschaft betrachtet, da der Haushaltsroboter autonom und somit ohne Anwesenheit einer Person in Betrieb sein kann. Insbesondere ist eine Überwachung der zu befahrenden Bodenfläche, insbesondere der zu reinigenden Bodenfläche allein dem Haushaltsroboter überlassen.

Daher kommt es bei bisherigen Haushaltsrobotern zu dem Problem, dass die Bodenfläche auch dann überfahren und ggf. bearbeitet, insbesondere gereinigt wird, wenn dort Exkremente eines Lebewesens, insbesondere eines Tieres, aber auch eines Menschen, aus welchem Grund auch immer vorhanden sind. Unter Exkrementen wird sowohl Urin als auch Kot verstanden. In solch einem Fall werden die Exkremente entweder durch das Fahrwerk über weitere Teilbereiche der Bodenfläche verteilt oder durch eine ggf. vorhandene Reinigungsvorrichtung am oder in dem Haushaltsroboter verteilt. Dadurch entsteht in jedem Fall eine unangenehme Situation, die der Benutzer des Haushaltsroboters vermeiden möchte.

Aus der JP 2007 29489 ist ein selbst angetriebener Reinigungsroboter mit einem Geruchssensor, mit einem Mittel zur Analyse des durch den Geruchssensor festgestellten Geruchs und mit einem Mittel zur Bestimmung des Reinigungszeitraums bekannt. Dabei soll mittels des Geruchssensors festgestellt werden, ob sich ein Tier in dem zu reinigenden Bereich aufhält. Falls ein Tier erkannt wurde, so soll das Reinigungsintervall des Reinigungsroboters verkürzt werden, um trotz der Verschmutzung durch Haare, etc. einen sauberen Boden zu gewährleisten.

Aus der nachveröffentlichten EP 3 072 432 A1 ist ein Reinigungsroboter bekannt, der Sensoren - bspw. in Form von Gassensoren - oder eine Kamera aufweist, mit dessen Hilfe der Reinigungsroboter mit Exkrementen von Tieren verunreinigte Bereiche nicht säubert bzw. umfährt.

Der vorliegenden Erfindung liegt daher das technische Problem zugrunde, Haushaltsroboter und ein Verfahren zum Betreiben eines Haushaltsroboters so zu verbessern, dass die beschriebenen Nachteile zumindest teilweise vermieden werden können.

Das zuvor aufgezeigte technische Problem wird erfindungsgemäß durch einen Haushaltsroboter der eingangs genannten Art dadurch gelöst, dass die Steuermittel das Fahrwerk ansteuern, um ein Überfahren des verunreinigten Teilbereichs zumindest teilweise zu verhindern, dass die Erfassungsmittel mindestens eine Infrarotkamera zum Erfassen eines Wärmebildes der Umgebung des Gehäuses aufweisen, dass Auswertemittel zum Auswerten des Wärmebildes vorgesehen sind und dass die Steuerung dann ein Überfahren und Reinigen des verunreinigten Teilbereichs zumindest teilweise verhindert, wenn mindestens ein Teilbereich des Wärmebildes eine vorgegebene Temperaturdifferenz zur weiteren Umgebung aufweist. Somit kann der Haushaltsroboter autonom auf das Vorhandensein von Exkrementen auf der Bodenfläche reagieren und eine zusätzliche Verteilung und weitere Verunreinigungen vermeiden.

Erfindungsgemäß steuern die Steuermittel das Fahrwerk an, um ein Überfahren des verunreinigten Teilbereichs zumindest teilweise zu verhindern. Somit wird ein Überfahren der Exkremente durch den Haushaltsroboter weitgehend oder ggf. auch ganz verhindert. Ein nur teilweises Überfahren der Exkremente erfolgt dann, wenn die Exkremente zu spät oder nur ungenau erkannt und lokalisiert werden können und das Fahrwerk nicht rechtzeitig oder nur ungenau angesteuert werden kann. Aber auch bei einem nur teilweisen Verhindern wird die Wirkung einer möglichst geringen Weiterverbreitung der Verschmutzung durch die Exkremente erreicht. Die Steuermittel sind dabei so eingerichtet, dass das Fahrwerk entweder abgestellt oder so angesteuert wird, dass der Haushaltsroboter vom verschmutzen Teilbereich des Bodens wegfährt oder diesen umfährt.

Eine weitere Ausgestaltung des beschriebenen Haushaltsroboters besteht darin, dass eine Reinigungsvorrichtung vorgesehen ist und dass die Steuermittel in Abhängigkeit von einem Ausgangssignal der Erfassungsmittel ein Reinigen des verunreinigten Teilbereichs zumindest teilweise verhindern. Somit kann zusätzlich oder alternativ zum Ansteuern des Fahrwerks erreicht werden, dass die Reinigungsvorrichtung nicht oder nur teilweise durch die Exkremente verschmutzt wird.

Erfindungsgemäß weisen die Erfassungsmittel mindestens eine Infrarotkamera zum Erfassen eines Wärmebildes der Umgebung des Gehäuses auf und Auswertemittel zum Auswerten des Wärmebildes sind vorgesehen. Die Steuerung verhindert dann zumindest teilweise ein Überfahren und Reinigen des verunreinigten Teilbereichs, wenn mindestens ein Teilbereich des Wärmebildes eine vorgegebene Temperaturdifferenz zur weiteren Umgebung aufweist. Dabei ist es bevorzugt, wenn die Temperaturdifferenz gleich oder größer 5°C gegenüber der weiteren Umgebung aufweist. Die Auswertemittel sind demnach eine Bildauswerteeinheit, die das aufgenommene Wärmebild auf Abweichungen der aufgenommenen Temperaturverteilung hin auswertet. Die Auswertemittel können somit Exkremente oder vergleichbar verschmutzte, jedenfalls nicht zu überfahrende Teilbereiche der Bodenfläche räumlich aufgelöst erkennen. Dadurch ist ein gezieltes Anhalten oder Umfahren des Teilbereiches möglich, wenn die räumliche Information an die Steuerung des Fahrwerks übermittelt wird.

Bei einer bevorzugten Ausgestaltung des Haushaltsroboters weisen die Erfassungsmittel mindestens einen Gassensor zum Erfassen mindestens einer spezifischen Gaskonzentration auf und Auswertemittel zum Auswerten der spezifischen Gaskonzentration sind vorgesehen. Vorzugsweise ist der mindestens eine Gassensor im in der normalen Fahrtrichtung vorderen Bereich des Haushaltsroboters oder im Ansaugbereich eines Bodenreinigungsroboters angeordnet. Die Steuerung verhindert dann zumindest teilweise ein Überfahren und Reinigen des verunreinigten Teilbereichs, wenn die spezifische Gaskonzentration einen vorgegebenen Grenzwert übersteigt. In diesem Fall kommt es nicht auf eine auffällige Temperatur, sondern auf einen bestimmten Geruch, also eine spezifische Gaskonzentration an, um einen mit Exkrementen verschmutzten Teilbereich der Bodenfläche zu erkennen. Somit können Exkremente, die schon die Umgebungstemperatur angenommen haben, sicher erkannt werden. Allerdings ist die räumliche Auflösung gegenüber einer Wärmebildkamera geringer.

In bevorzugter Weise erfasst der mindestens eine Sensor mindestens eine spezifische Konzentration von Methan, Ammoniak, Butansäure, Phenol, Capronsäure, Mercaptane oder von Schwefelwasserstoffen. Die genannten Gases sind spezifisch für Exkremente von Lebewesen und ermöglichen eine sichere Detektion der Exkremente. Dabei ist es vorteilhaft, wenn mehrere Sensoren für unterschiedliche Gaskonzentrationen parallel eingesetzt werden.

Das oben aufgezeigte technische Problem wird auch durch ein Verfahren zum Betreiben eines Haushaltsroboters nach einem der Ansprüche 1 bis 4 gelöst, wobei der Haushaltsroboter ein Fahrwerk aufweist, bei dem die zu befahrende Bodenfläche auf das Vorhandensein von Exkrementen eines Lebewesens erfasst wird, bei dem bei einem Erfassen von Exkrementen die Einstellung einer Funktion des Haushaltsroboters verändert wird und bei dem die Einstellung des Fahrwerks derart verändert wird, dass ein Überfahren von verunreinigten Teilbereichen zumindest teilweise ausgeschlossen wird. Somit kann ein Haushaltsroboter so betrieben werden, dass bei einem Auftreten von Exkrementen auf der Bodenfläche eine möglichst geringe, wenn nicht sogar keine Verschmutzung des Haushaltsroboters selber und/oder der weiteren Bodenfläche erreicht werden kann. Dadurch wird die Anwendung des Haushaltsroboters benutzerfreundlicher.

Erfindungsgemäß wird die Einstellung des Fahrwerks verändert wird, wenn Exkremente auf der Bodenfläche festgestellt werden. Insbesondere kann in einem solchen Fall das Fahrwerk angehalten werden. Ebenso ist es möglich, dass bei einem Erfassen von Exkrementen der Teilbereich der Bodenfläche umfahren wird, der mit den Exkrementen verschmutzt ist. Somit wird aktiv vermieden, dass der Haushaltsroboter über den durch die Exkremente verschmutzten Teilbereich der Bodenfläche fährt und somit die Verschmutzung durch das Fahrwerk weiter verbreitet wird.

Eine weitere Ausgestaltung des beschriebenen Verfahrens besteht darin, dass bei einem Erfassen von Exkrementen eine Reinigungsvorrichtung abgeschaltet wird. In diesem Fall handelt es sich bei dem Haushaltsroboter um einen Bodenbearbeitungsroboter mit einer Reinigungsvorrichtung, die insbesondere als elektrisch betriebene Saug-Gebläseeinheit und/oder elektromotorisch angetriebene Bürste und/oder Borstenwalze und/oder Wischeinheit ausgebildet ist. Durch das beschriebene Verfahren wird aktiv erreicht, dass die Reinigungsvorrichtung nicht mit den Exkrementen in Berührung kommt und dass eine Verunreinigung der Reinigungsvorrichtung und somit des Haushaltsroboters selbst weitgehend, wenn nicht vollständig verhindert wird.

Das zuvor beschriebene Verfahren kann auch dadurch weitergebildet sein, dass das Erfassen der Exkremente auf einem Display und/oder die Lage des Teilbereichs der verschmutzten Bodenfläche auf einem Display angezeigt werden. Somit kann der Benutzer des Haushaltsroboters besser darüber informiert werden, warum beispielsweise der Haushaltsroboter angehalten und seine autonom zu verrichtende Arbeit unterbrochen hat.

Im Folgenden wird die Erfindung anhand von Ausführungsbeispielen mit Bezug auf die Zeichnung erläutert. In der Zeichnung zeigen
- Fig. 1: ein Ausführungsbeispiel eines erfindungsgemäßen Haushaltsroboters in einer perspektivischen Ansicht von oben und
- Fig. 2: der in Fig. 1 dargestellte Haushaltsroboter in einer perspektivischen Ansicht von unten.

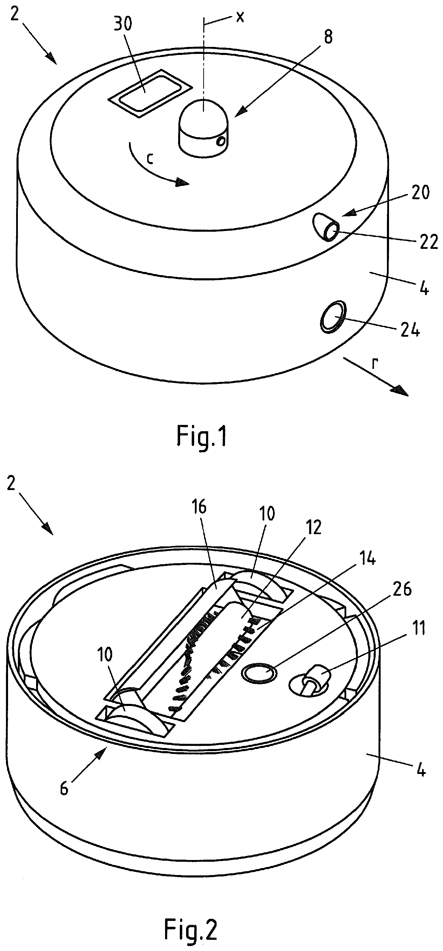

In den Fig. 1 und 2 ist ein erfindungsgemäßer Haushaltsroboter in Form eines Bodenreinigungsroboters 2 dargestellt. Der Bodenreinigungsroboter 2 weist ein Gehäuse 4, ein an der Unterseite des Gehäuses 4 angeordnetes Fahrwerk 6, eine Sensorik 8 zum Erfassen der Umgebung des Gehäuses 4 und eine Steuerung zum selbsttätigen Antreiben des Fahrwerks 6 auf.

Das Fahrwerk 6 ist an der Unterseite des Gehäuses 4 angeordnet und der zu reinigenden Bodenfläche zugewandt. Das Fahrwerk 6 weist zwei elektromotorisch angetriebene Verfahrräder 10 und ein Mitlaufrad 11 auf, so dass eine Dreipunktauflage des Bodenreinigungsroboters 2 auf der zu reinigenden Bodenfläche erreicht wird. Durch unterschiedliche Ansteuerung der beiden Verfahrräder 10 kann der Bodenreinigungsroboter 2 in beliebige Richtungen verfahren werden, wobei eine Vorwärtsfahrt in Richtung des Pfeils r gemäß Fig. 1 erfolgt. Ebenso ist eine Drehung auf der Stelle sowie eine Rückwärtsfahrt entgegen der Richtung des Pfeils r möglich.

Wie sich insbesondere aus Fig. 2 ergibt, ist an der Unterseite des Gehäuses 4 eine über die Unterkante hinausragende, elektromotorisch angetriebene Bürste 12 innerhalb einer Saugöffnung 14 angeordnet. Des Weiteren ist ein nicht dargestellter Sauggebläsemotor vorgesehen, der ebenfalls elektrisch betrieben wird. Zudem ist eine kehrblechartige Rampe 16 vorgesehen, über die abgebürstete Schmutzpartikel in eine nicht dargestellte behälterartige Aufnahme transportiert werden.

Die Elektroversorgung der einzelnen Komponenten des Bodenreinigungsroboters 2, also des Elektromotors der Verfahrräder 10, des Elektroantriebs der Bürste 12, des Sauggebläses und der weiteren Elektronik der Steuerung erfolgt über einen nicht dargestellten, wiederaufladbaren Akkumulator.

Um die Umgebung, Raumbegrenzungen und ggf. Hindernisse erkennen zu können, und um insbesondere ein Festfahren des Bodenreinigungsroboters 2 zu verhindern, ist die bereits erwähnte Sensorik 8 vorgesehen, die als sensorische Hinderniserkennung ausgebildet ist. Diese besteht aus einer optischen Sendeeinheit und einer optischen Empfängereinheit, die beide in der in Fig. 8 dargestellten Sensorik 8 integriert sind. Die Sensorik 8 ist beim vorliegenden Ausführungsbeispiel um eine Vertikalachse x des Gehäuses 4 drehbar angeordnet, wie mit dem Pfeil c in Fig. 1 dargestellt ist.

Erfindungsgemäß sind Erfassungsmittel 20 zum Erfassen eines von Exkrementen eines Lebewesens verunreinigten Teilbereichs der Bodenfläche vorgesehen, auf der der Bodenreinigungsroboter 2 angeordnet ist, und die Steuermittel verändern in Abhängigkeit von einem Ausgangssignal der Erfassungsmittel 20 die Funktionsweise des Bodenreinigungsroboters 2. Dazu können die Steuermittel das Fahrwerk 6 so ansteuern, dass ein Überfahren des verunreinigten Teilbereichs zumindest teilweise verhindert wird. Alternativ oder zusätzlich dazu können die Steuermittel in Abhängigkeit von einem Ausgangssignal der Erfassungsmittel 20 ein Reinigen des verunreinigten Teilbereichs zumindest teilweise verhindern.

Die Erfassungsmittel 20 können unterschiedlich ausgebildet sein, wie im Folgenden beschrieben wird.

Bei dem in Fig. 1 dargestellten Ausführungsbeispiel weisen die Erfassungsmittel 20 mindestens eine Infrarotkamera 22 zum Erfassen eines Wärmebildes der Umgebung des Gehäuses 4 auf. Nicht dargestellte Auswertemittel, die auch einen Teil der Steuerung bilden können, sind zum Auswerten des Wärmebildes vorgesehen und die Steuerung verhindert dann zumindest teilweise ein Überfahren und Reinigen des verunreinigten Teilbereichs, wenn mindestens ein Teilbereich des Wärmebildes eine vorgegebene Temperaturdifferenz zur weiteren Umgebung aufweist. Insbesondere wird bei der Auswertung im aufgenommenen Wärmebild nach einer Temperaturdifferenz Differenz größer oder gleich 5° C gesucht.

Die Aktivität der Infrarotkamera 22 kann auch abschaltbar werden, um in Räumen mit einer Fußbodenheizung bei der Auswertung des Kamerasignals Fehlinterpretationen zu vermeiden. Eine weitere Option besteht darin, regelmäßige Konturen oder Kanten im Bildsignal der Infrarotkamera zu erfassen und diese dem Raum zuzuordnen. Die Fußbodenoberfläche kann beispielsweise durch Sonnenstrahlen, elektrische Kabel oder Heizungsrohre die Oberfläche erwärmt sein, wodurch die regelmäßigen Konturen und Kanten entstehen.

In den Fig. 1 und 2 ist eine weitere Alternative für die Ausgestaltung der Erfassungsmittel dargestellt. In diesem Fall weisen die Erfassungsmittel 20 einen Gassensor 24 bzw. 26 zum Erfassen mindestens einer spezifischen Gaskonzentration auf. Die bereits angesprochenen Auswertemittel sind zum Auswerten der spezifischen Gaskonzentration vorgesehen und die Steuerung verhindert dann zumindest teilweise ein Überfahren und Reinigen des verunreinigten Teilbereichs, wenn die spezifische Gaskonzentration zumindest eines Sensors 24, 26 einen vorgegebenen Grenzwert übersteigt.

Der Gassensor 24 ist dabei am Gehäuse 4 in der Hauptfahrtrichtung r angeordnet. Der alternative Gassensor 26 ist dagegen an der Unterseite des Gehäuses 4 im Bereich des Saugmunds 14 angeordnet. Bei dem dargestellten Ausführungsbeispiel sind somit zwei Gassensoren 24 und 26 vorgesehen. Es ist jedoch möglich, lediglich einen der beiden Gassensoren zu verwenden oder noch weitere Gassensoren an unterschiedlichen Stellen im oder am Gehäuse 4 anzuordnen.

Die Gassensoren 24 bzw. 26 sind in der Lage, die Umgebungsluft hinsichtlich einer spezifischen Gaskonzentration zu analysieren. Dabei kann der Sensor 24 bzw. 26 mindestens eine spezifische Konzentration von Methan, Ammoniak, Butansäure, Phenol, Capronsäure, Mercaptane oder von Schwefelwasserstoffen erfassen. Diese spezifischen Gase sind charakteristisch für Exkremente von Lebewesen, so dass bei Überschreiten eines Grenzwertes der spezifischen Konzentration des zu detektierenden Gases ein entsprechendes Ausgangssignal erzeugt wird, dass das Vorhandensein von Exkrementen anzeigt.

Wie in Fig. 1 weiterhin dargestellt ist, weist das Gehäuse 4 an seiner Oberseite ein Display 30 auf, auf dem unter anderem dargestellt werden kann, ob und gegebenenfalls wo Exkremente auf der Bodenfläche nachgewiesen worden sind.

## Patentansprüche

1. Haushaltsroboter, insbesondere selbsttätig verfahrbarer Reinigungsroboter für eine Bodenfläche,
- mit einem Gehäuse (4),
- mit einem an der Unterseite des Gehäuses (4) angeordneten Fahrwerk (6),
- mit einer Sensorik (8) zum Erfassen der Umgebung des Gehäuses (4) und
- mit einer Steuerung aufweisend Steuermittel zum selbsttätigen Steuern des Fahrwerks (6),
- wobei Erfassungsmittel (20) zum Erfassen eines von Exkrementen eines Lebewesens verunreinigten Teilbereichs der Bodenfläche vorgesehen sind und
- wobei die Steuermittel in Abhängigkeit von einem Ausgangssignal der Erfassungsmittel (20) die Funktionsweise des Haushaltsroboters verändern, **dadurch gekennzeichnet,**
- **dass** die Steuermittel das Fahrwerk (6) ansteuern, um ein Überfahren des verunreinigten Teilbereichs zumindest teilweise zu verhindern,
- **dass** die Erfassungsmittel (20) mindestens eine Infrarotkamera (22) zum Erfassen eines Wärmebildes der Umgebung des Gehäuses (4) aufweisen,
- **dass** Auswertemittel zum Auswerten des Wärmebildes vorgesehen sind und
- **dass** die Steuerung dann ein Überfahren und Reinigen des verunreinigten Teilbereichs zumindest teilweise verhindert, wenn mindestens ein Teilbereich des Wärmebildes eine vorgegebene Temperaturdifferenz zur weiteren Umgebung aufweist.

2. Haushaltsroboter nach Anspruch 1,
**dadurch gekennzeichnet,**
- **dass** eine Reinigungsvorrichtung (12, 14) vorgesehen ist und
- **dass** die Steuermittel in Abhängigkeit von einem Ausgangssignal der Erfassungsmittel (20) ein Reinigen des verunreinigten Teilbereichs zumindest teilweise verhindern.

3. Haushaltsroboter nach Anspruch 1 oder 2,
**dadurch gekennzeichnet,**
- **dass** die Erfassungsmittel (20) mindestens einen Gassensor (24, 26) zum Erfassen mindestens einer spezifischen Gaskonzentration aufweisen,
- **dass** Auswertemittel zum Auswerten der spezifischen Gaskonzentration vorgesehen sind und
- **dass** die Steuerung dann ein Überfahren und/oder Reinigen des verunreinigten Teilbereichs zumindest teilweise verhindert, wenn die spezifische Gaskonzentration einen vorgegebenen Grenzwert übersteigt.

4. Haushaltsroboter nach Anspruch 3,
**dadurch gekennzeichnet,**
**dass** der mindestens eine Gassensor (24, 26) mindestens eine spezifische Konzentration von Methan, Ammoniak, Butansäure, Phenol, Capronsäure, Mercaptane oder von Schwefelwasserstoffen erfasst.

5. Verfahren zum Betreiben eines Haushaltsroboters nach einem der Ansprüche 1 bis 4,
- bei dem die zu reinigende Bodenfläche auf das Vorhandensein von Exkrementen eines Lebewesens erfasst wird,
- bei dem bei einem Erfassen von Exkrementen die Einstellung einer Funktion des Haushaltsroboters verändert wird und
- bei dem die Einstellung des Fahrwerks derart verändert wird, dass ein Überfahren von verunreinigten Teilbereichen zumindest teilweise ausgeschlossen wird.

6. Verfahren nach Anspruch 5,
bei dem bei einem Erfassen von Exkrementen das Fahrwerk angehalten wird.

7. Verfahren nach Anspruch 5,
bei dem bei einem Erfassen von Exkrementen der Teilbereich der Bodenfläche umfahren wird, der mit den Exkrementen verschmutzt ist.

8. Verfahren nach einem der Ansprüche 5 bis 7,
bei dem bei einem Erfassen von Exkrementen eine Reinigungsvorrichtung abgeschaltet wird.

9. Verfahren nach einem der Ansprüche 5 bis 8,
bei dem das Erfassen der Exkremente auf einem Display angezeigt wird.

10. Verfahren nach einem der Ansprüche 5 bis 9,
bei dem die Lage des Teilbereichs der verschmutzten Bodenfläche auf einem Display angezeigt wird.

## Claims

1. Household robot, in particular an automatically movable cleaning robot for a floor area,
- having a housing (4),
- having a running gear (6) which is arranged on the underside of the housing (4),
- having a sensor system (8) for detecting the area surrounding the housing (4) and
- having a control for automatically controlling the running gear (6),
- wherein detection means (20) for detecting a sub-area of the floor area which has been soiled by excrement from a living being are provided, and
- wherein the control means change the operating mode of the household robot in dependency of an output signal from the detection means (20),
**characterized in**
- **that** the control means control the running gear (6) in order to at least partly prevent the soiled sub-area from being driven over,.
- in that the detection means (20) have at least one infrared camera (22) for recording a thermal image of the surroundings of the housing (4),
- in that evaluation means are provided for evaluating the thermal image, and
- in that the control means then at least partly prevents the soiled sub-area from being driven over and cleaned if at least one sub-area of the thermal image has a predefined difference in temperature to the further surroundings.

2. Household robot according to Claim 1,
**characterised**
- **in that** a cleaning mechanism (12, 14) is provided, and
- **in that** the control means at least partly prevent the soiled sub-area from being cleaned in dependency of an output signal from the detection means (20).

3. Household robot according to Claim 1 or 2,
**characterised**
- **in that** the detection means (20) have at least one gas sensor (24, 26) for detecting at least one specific gas concentration,
- **in that** evaluation means for evaluating the specific gas concentration are provided, and
- **in that** the control then at least partly prevents the soiled sub-area from being driven over and/or cleaned if the specific gas concentration exceeds a predefined limit value.

4. Household robot according to Claim 3,
**characterised**
**in that** the at least one gas sensor (24, 26) detects at least one specific concentration of methane, ammonia, butanoic acid, phenol, caproic acid, mercaptans or of hydrogen sulphides.

5. Method for operating a household robot according to one of claims 1 to 4,
- in which the floor area to be cleaned is detected for the presence of excrement from a living being,
- in which the setting of a function of the household robot is changed when excrement is detected, and
- in which the setting of the running gear is changed in such a way, that at least partly the soiled sub-area is prevented from being driven over.

6. Method according to Claim 5,
in which the running gear is stopped when excrement is detected.

7. Method according to Claim 5,
in which when excrement is detected the sub-area of the floor area soiled with the excrement is bypassed.

8. Method according to any one of Claims 5 to 7,
in which a cleaning mechanism is switched off when excrement is detected.

9. Method according to any one of Claims 5 to 8,
in which the detection of excrement is shown on a display.

10. Method according to any one of Claims 5 to 9,
in which the position of the sub-area of the soiled floor area is shown on a display.

## Revendications

1. Robot domestique, en particulier un robot de nettoyage automoteur pour une surface de sol
- avec un boîtier (4),
- avec un mécanisme de déplacement (6) disposé sur la face inférieure du boîtier (4),
- avec un système de capteur (8) pour détecter l'environnement du boîtier (4) et
- avec un système de commande comprenant des moyens de commande pour commander automatiquement le mécanisme de déplacement (6),
- où des moyens de détection (20) sont prévus pour détecter une zone partielle de la surface du sol souillée par les excréments d'un être vivant, et
- où les moyens de commande changent le mode fonctionnement du robot domestique en fonction d'un signal de sortie des moyens de détection (20), **caractérisé**
- **en ce que** les moyens de commande commandent le mécanisme de déplacement (6) afin d'empêcher au moins partiellement un passage sur la zone partielle souillée,
- **en ce que** les moyens de détection (20) comportent au moins une caméra infrarouge (22) pour détecter une image thermique de l'environnement du boîtier (4),
- **en ce que** des moyens d'évaluation sont prévus pour évaluer l'image thermique, et
- **en ce que** les moyens de commande empêchent au moins partiellement un passage et un nettoyage sur la zone partielle souillée lorsqu'au moins une zone partielle de l'image thermique présente une différence de température prédéterminée par rapport au reste de l'environnement.

2. Robot domestique selon la revendication 1,
**caractérisé**
- **en ce qu'**un dispositif de nettoyage (12, 14) est prévu, et
- **en ce que** les moyens de commande, en fonction d'un signal de sortie des moyens de détection (20), empêchent au moins partiellement un nettoyage de la zone partielle souillée.

3. Robot domestique selon la revendication 1 ou 2,
**caractérisé**
- **en ce que** les moyens de détection (20) ont au moins un capteur de gaz (24, 26) pour détecter au moins une concentration spécifique de gaz,
- **en ce que** des moyens d'évaluation sont prévus pour évaluer la concentration spécifique de gaz, et
- **en ce que** le système de commande empêche au moins partiellement un passage et/ou un nettoyage sur la zone partielle souillée lorsque la concentration spécifique de gaz dépasse une valeur limite prédéterminée.

4. Robot domestique selon la revendication 3,
**caractérisé**
- **en ce que** l'au moins un capteur de gaz (24, 26) détecte au moins une concentration spécifique de méthane, d'ammoniac, d'acide butanoïque, de phénol, d'acide caproïque, de mercaptans ou d'hydrogène sulfuré.

5. Procédé de fonctionnement d'un robot domestique selon l'une quelconque des revendications 1 à 4,
- dans lequel la surface du sol à nettoyer est détectée pour la présence d'excréments d'un être vivant,
- dans lequel, lorsque des excréments sont détectés, la configuration d'une fonction du robot domestique est modifié, et
- dans lequel la configuration du mécanisme de déplacement est modifiée de manière à empêcher au moins partiellement un passage sur les zones partielles souillées.

6. Procédé selon la revendication 5,
- dans lequel, en cas de détection d'excréments, le mécanisme de déplacement est arrêté.

7. Procédé selon la revendication 5,
- dans lequel, en cas de détection d'excréments, la zone partielle de la surface du sol qui est souillée par les excréments est contournée.

8. Procédé selon l'une quelconque des revendications 5 à 7,
- dans lequel, lorsqu'un excrément est détecté, un dispositif de nettoyage est désactivé.

9. Procédé selon l'une quelconque des revendications 5 à 8,
- dans lequel la détection d'excréments est indiquée sur un écran.

10. Procédé selon l'une quelconque des revendications 5 à 9,
- dans lequel l'emplacement de la zone partielle de la surface de sol souillée est indiqué sur un écran.
